# EUROPÄISCHE PATENTANMELDUNG

(11) **EP 2 527 712 A2**
(43) Veröffentlichungstag der Anmeldung: **28.11.2012**
(21) Anmeldenummer: 12003243.8
(22) Anmeldetag: 03.05.2012
(51) Int. Cl.: F16N 39/00

(54) **Einrichtung mit Schmiermittelschutzanordnung und Schmierverfahren**

(30) Priorität: 26.05.2011 DE 102011102536
(71) Anmelder: Linde Aktiengesellschaft, 80331 Munich (DE)
(72) Erfinder: Foret, Pierre, 80796 München (DE)
(74) Vertreter: Gellner, Bernd

(57) **Zusammenfassung**

Die Erfindung betrifft eine Einrichtung (10) mit wenigstens zwei zu schmierenden Reibpartnern (11, 12) und zumindest einem in der Einrichtung (10) angeordneten Schmiermittelreservoir (14) mit einem Schmiermittel, bei der zumindest eine Schmierstoffschutzanordnung vorgesehen ist, die Mittel (15, 16) zum Durchströmen des Schmiermittels in dem Schmiermittelreservoir (14) sowie der Einrichtung (10) mit einem Schmiermittelschutzgas aufweist.

## Beschreibung

Die vorliegende Erfindung betrifft eine zu schmierende Einrichtung mit einer Schmiermittelschutzanordnung sowie ein entsprechendes Schmierverfahren.

### Stand der Technik

Die Schmierung von Maschinenelementen mit Schmiermitteln wie Fetten, Ölen oder Festschmierstoffen erfüllt unterschiedliche Aufgaben. Sie dient einerseits der Verhinderung oder Reduzierung von Verschleißerscheinungen an Kontaktstellen von sogenannten Reibpartnern, einem Abbau von Spannungsspitzen sowie, beispielsweise in Wälzlagern, der Verringerung zusätzlicher Reibungsschubspannungen an Oberflächen. Darüber hinaus kommen Schmiermittel als Korrosionsschutz zum Einsatz und werden, sofern ein ausreichender Schmiermittelaustausch und damit eine Abfuhr von Wärme gewährleistet werden kann, zur Kühlung von Maschinenelementen verwendet.

Ziel der Schmierung ist es, einander kontaktierende Oberflächen der Reibpartner durch einen hydrodynamischen Flüssigkeitsfilm oder eine schützende Reaktionsschicht zu trennen. Bei der hydrodynamischen Schmierfilmbildung spielen häufig auch elastische Verformungen eine Rolle, so dass auch von einer sogenannten elastohydrodynamischen Schmierung gesprochen wird. Bei der Schmierung wird eine vollständige Trennung der Reibpartner angestrebt. Diese lässt sich durch eine geeignete Kombination der Schmiermittelviskosität, der Bewegungsgeschwindigkeit der Reibpartner und deren Kontaktdruck, aber auch durch konstruktive Anpassungen erreichen.

Wie erwähnt, sind als Schmiermittel Schmieröle, Schmierfette und Festschmierstoffe bekannt. Im Rahmen dieser Anmeldung liegt das Hauptaugenmerk dabei auf flüssigen Schmiermitteln wie z. B. Schmierölen. Wichtige beeinflussbare Kenngrößen von Schmierölen sind die Dichte, der Viskositätsindex, die Scherstabilität, der sogenannte Cloud-and-Pour-Point, das Neutralisationsvermögen, die Neutralisationszahl, die Gesamtbasenzahl und der Flammpunkt. Ferner beeinflussen die Wärmekapazität, die Luftaufnahmekapazität sowie der Gehalt an Wasser und Fremdstoffen die Eigenschaften eines Schmieröls.

Zur Modifikation tribologisch relevanter Schmieröleigenschaften, beispielsweise des Viskositäts-fTemperatur- und/oder des Reibungs- und Verschleißverhaltens, jedoch auch zur Erhöhung der Oxidationsbeständigkeit oder der Verhinderung der Schaumbildung sind unterschiedlichste Schmieröladditive bekannt.

Additive können dabei in Form kommerziell erhältlicher sogenannter Additivpakete einem Schmieröl beigegeben werden. In modernen Motorenölen liegen 10 bis 20 % des Gesamtvolumens in Form von Additiven vor. Einen zusätzlichen Anteil, typischerweise etwa 3 %, stellen Polymerzusätze dar.

Die Lebensdauer von Schmierölen ist begrenzt. Aufgrund von Interaktionen mit dem zu schmierenden System und der umgebenden Atmosphäre kann die Lebensdauer des Schmieröls und auch jene des tribologischen Systems insgesamt beträchtlich reduziert werden. Als besonders kritisch sind dabei Oxidationsvorgänge anzusehen, die zu einer Erhöhung des Säurewerts und damit zu einer erhöhten Korrosivität des Schmieröls führen. Eine Zunahme der Viskosität bewirkt sich über die Zeit ändernde tribologische Eigenschaften des Systems. Ablagerungen, die aufgrund von Korrosion durch sich abscheidende Schmierölkomponenten entstehen, können Blockaden verursachen. Ein Verlust von Additiven kann dazu führen, dass bestimmte Bestandteile des Schmieröls nicht mehr ausreichend geschützt sind, wodurch dieses an Qualität verliert. Damit sind häufige Ölwechsel bzw. Wartungsintervalle erforderlich.

Es ist daher wünschenswert, die Lebensdauer eines Schmieröls, allgemeiner eines flüssigen Schmiermittels, insbesondere eines mineralölbasierten Schmieröls, zu erhöhen.

### Offenbarung der Erfindung

Vor diesem Hintergrund stellt die vorliegende Erfindung eine zu schmierende Einrichtung mit einer Schmiermittelschutzanordnung sowie ein entsprechendes Schmierverfahren mit den Merkmalen der unabhängigen Patentansprüche bereit.

Bevorzugte Ausgestaltungen sind Gegenstand der jeweiligen Unteransprüche sowie der nachfolgenden Beschreibung.

### Vorteile der Erfindung

Die Erfindung schlägt eine Einrichtung mit wenigstens zwei zu schmierenden Reibpartnern und zumindest einem in der Einrichtung angeordneten Schmiermittelreservoir für ein Schmiermittel vor, bei der zumindest eine Schmiermittelschutzanordnung vorgesehen ist, die Mittel zum Durchströmen des Schmiermittels in dem Schmiermittelreservoir mit einem Schmiermittelschutzgas aufweist.

Neben dem Schmiermittelreservoir ist auch die Einrichtung selbst zum Durchströmen mit dem Schmiermittelschutzgas eingerichtet. Hierdurch kann kontinuierlich oder intermittierend eine geeignete Schmiermittelatmosphäre, z.B. in Form eines ein sauerstofffreien Aerosols, in der zu schmierenden Einrichtung bereitgestellt oder erneuert werden, wodurch ein besonders effektiver Schutz erzielt wird.

Ist im Rahmen dieser Anmeldung von einem "Schmiermittelschutzgas" die Rede, sei darunter ein Gas verstanden, das aufgrund seiner physikalischen und/oder chemischen Eigenschaften, z. B. aufgrund seiner Inertheit, eine verlängerte Schmiermittellenbensdauer und/oder verbesserte Schmiermitteleigenschaften bewirkt. Vorzugsweise umfasst ein derartiges Schmiermittelschutzgas Inertgase wie beispielsweise Stickstoff und Kohlendioxid und/oder Edelgase wie Argon. Aber auch Gase wie Kohlenmonoxid oder Acetylen sind geeignet. Ein Schmiermittelschutzgas ist vorteilhafterweise sauerstofffrei, um eine Oxidation von Schmiermittelbestandteilen zu vermeiden. Vorzugsweise ist das Schmiermittelschutzgas auch frei von anderen korrosiven Bestandteilen, insbesondere frei von Wasser und reibenden Partikeln.

Wenn im Rahmen der vorliegenden Anmeldung von einem "sauerstofffreien" Schmiermittelschutzgas die Rede ist, sei darunter auch ein Gas verstanden, das noch geringe (Rest-)Gehalte an gelöstem Sauerstoff aufweist oder zur Sauerstoffbildung in geringem Umfang in der Lage ist. Eine vollständige Sauerstofffreiheit ist zwar wünschenswert, jedoch in der Regel mit beträchtlichen Mehrkosten verbunden.

Verfahren zur Entfernung von Sauerstoff, beispielsweise aus entsprechenden Gasen, sind hinlänglich bekannt. Beispielsweise kann Sauerstoff aus Luft in einer Kältefalle auskondensiert oder katalytisch abgeschieden werden. Inertgase wie Argon, Stickstoff oder Kohlendioxid können auch in flüssiger, sauerstofffreier Form bereitgestellt und vor der Verwendung in einem Schmiermittelschutzgas in die Gasphase überführt werden.

Durch die erfindungsgemäßen Maßnahmen wird es ermöglicht, in einer zu schmierenden Einrichtung ein sauerstofffreies Schmiermittel-/Gassystem zu schaffen, das dort dauerhaft bereitsteht und die Lebensdauer reibender Komponenten signifikant verlängert. Die Wartungsintervalle entsprechender Anlagen können damit deutlich vergrößert werden, was zu einer höheren Verfügbarkeit und/oder zu geringeren Wartungskosten führt. Aufgrund einer entsprechenden sauerstofffreien Schmiermittelatmosphäre können auch sauerstoffempfindliche Schmiermitteladditive verwendet werden, ohne dass ein häufiger Schmiermittelwechsel erfolgen müsste.

Als besonders vorteilhaft wird eine Schmierstoffschutzanordnung angesehen, die neben einer Zuleitung für das Schmiermittelschutzgas Mittel zum Einperlen des Schmiermittelschutzgases in das Schmiermittel aufweist. Hierbei kann es sich beispielsweise um eine Gaseinperleinrichtung handeln, die es ermöglicht, Gasbläschen zu erzeugen, die das Schmiermittel durchströmen und beim Durchströmen des Schmiermittels ein Aerosol und/oder einen Schmiermittelnebel erzeugen. Die Gasbläschen können beispielsweise durch ein Filter (Membran oder Fritte) erzeugt werden, wobei die Gasbläschengröße durch die jeweilige Porengröße beeinflusst wird. Die Einperlung des Schmiermittelschutzgases, und damit die Erzeugung des Schmiermittel-/Gassystems, kann, wie erwähnt, kontinuierlich oder intermittierend, z.B. in Schmierintervallen, erfolgen. Eine kontinuierliche Einperlung garantiert ein Schmiermittel-/Gassystem mit konstanten Eigenschaften, wohingehend ein intermittierendes Einperlen Schmiermittelschutzgas einspart.

Wenn im Rahmen dieser Erfindung von einem "Aerosol" die Rede ist, sei darunter jedes System verstanden, in dem ein flüssiges Schmiermittel in einem gasförmigen Trägerfluid, z.B. in Form von Tröpfchen, vorliegt. Die jeweilige Tröpfchengröße kann dabei sehr unterschiedlich sein und im Bereich zwischen 0,5 nm und mehreren 10 µm liegen.

Vorteilhafterweise weist die zu schmierende Einrichtung Auslassöffnungen für das Schmiermittelschutzgas auf. Das entweichende Schmiermittelschutzgas kann dann beispielsweise einer Reinigung (z.B. durch Filtration oder chemische Aufbereitung) unterworfen und/oder einer Schmierstoffschutzanordnung erneut zugeführt werden. Verbrauchtes Schmiermittelschutzgas kann hierdurch effektiv abgeführt werden.

Vorteilhaft kann auch sein, eine Schmierstoffschutzanordnung bereitzustellen, die eine Heizeinrichtung für das Schmiermittel und/oder das Schmiermittelschutzgas aufweist. Wie allgemein bekannt, weisen bestimmte erwärmte Gase, beispielsweise Acetylen oder Kohlenmonoxid, die als Schmiermittelschutzgas verwendet werden können, einen positiven Einfluss auf die tribologischen Eigenschaften eines zu schmierenden Systems auf. Es kann daher vorgesehen sein, mittels einer Gasheizung einen entsprechend erwärmten Gasstrom bereitzustellen. Durch entsprechende Heizeinrichtungen wird eine besonders gute Steuerbarkeit von Parametern des Schmiermittels und/oder des Schmiermittelschutzgases, beispielsweise seiner Dichte, seiner Viskosität und/oder seiner Komprimierbarkeit gewährleistet.

Bei einer erhöhten Temperatur in einer Schmierstoffschutzanordnung kann gegebenenfalls auch erst eine gewisse Menge an Schmiermittel in die Gasphase gebracht und dadurch ein Aerosol erzeugt werden. Trifft ein derartiges erwärmtes Aerosol auf (kühlere) Getriebeelemente, werden flüssige Aerosolpartikel an diesen durch Kondensation abgeschieden, so dass eine zielgerichtete Schmierung erreicht werden kann.

Ein erfindungsgemäßes Verfahren zum Schmieren umfasst das Durchströmen eines Schmiermittelreservoirs und des darin enthaltenen Schmiermittels und der Einrichtung selbst mit einem Schmiermittelschutzgas unter Verwendung der erläuterten Schmiermittelschutzanordnung.

Vorteilhafterweise können in einem entsprechenden Verfahren, wie erwähnt, als Schmiermittelschutzgase Inertgase wie Argon oder Stickstoff, aber auch Gase wie Kohlendioxid, Kohlenmonoxid und/oder Acetylen verwendet werden, von denen bekannt ist, dass sie die tribologischen Eigenschaften eines zu schmierenden Systems positiv beeinflussen. Entsprechende Gasmischungen können ebenfalls Verwendung finden.

Als Schmiermittel wird vorzugsweise ein mineralölbasiertes Schmiermittel, insbesondere ein Mineralöl mit Polymerzusätzen und/oder Additiven verwendet. Wie bereits zuvor erläutert, können aufgrund des verbesserten Schutzes des Schmiermittels durch die erfindungsgemäßen Maßnahmen auch Polymerzusätze verwendet werden, die in herkömmlichen Schmiersystemen nicht zum Einsatz kommen könnten, weil sie der schädlichen Oxidationswirkung des Sauerstoffs ausgesetzt wären. Insbesondere kann durch den Einsatz der Erfindung jedoch auf bestimmte Additive wie z. B. Antioxidantien verzichtet werden, wodurch bedeutende Kostenvorteile erzielt werden.

Wie bereits erwähnt, kann in einem entsprechenden Verfahren eine Viskosität, eine Dichte und/oder eine Komprimierbarkeit des Schmiermittels und/oder des Schmiermittelschutzgases eingestellt werden. Dies kann beispielsweise durch eine geeignete Gaszusammensetzung und -temperatur und/oder eine geeignete Strömungsgeschwindigkeit oder durch entsprechend eingestellte Drücke erfolgen.

Das erfindungsgemäße Verfahren lässt sich bei einer Reihe von zu schmierenden Einrichtungen wie beispielsweise Turbinen von Windkraftanlagen, Motorenteilen, Lagern, Ventilen und Ventilantrieben und schneidenden Werkzeugen einsetzen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.

### Figurenbeschreibung

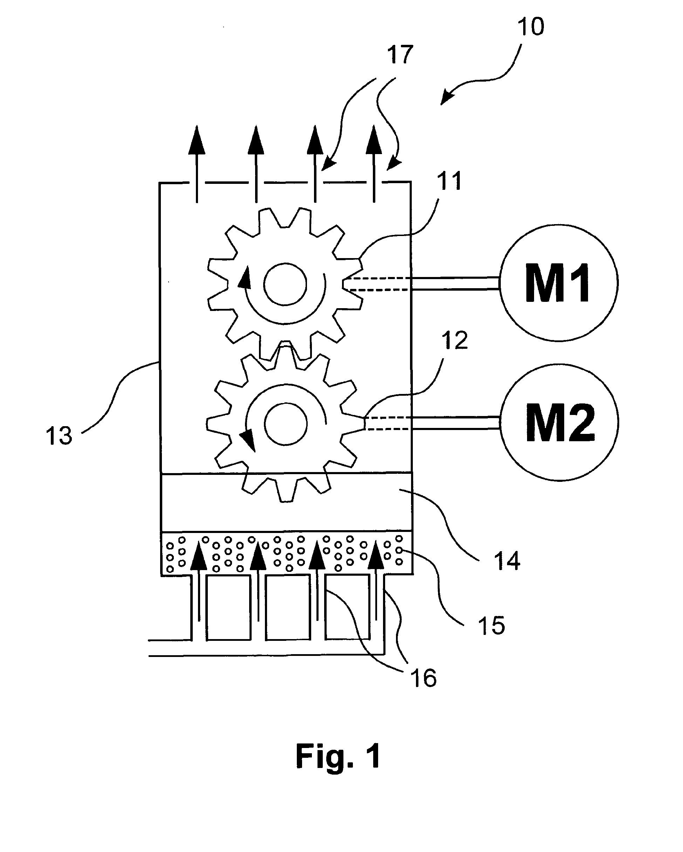

Figur 1 zeigt eine Einrichtung gemäß einer besonders bevorzugten Ausführungsform der Erfindung.

In Figur 1 ist eine Einrichtung gemäß einer besonders bevorzugten Ausführungsform der Erfindung dargestellt und insgesamt mit 10 bezeichnet. Die Einrichtung 10 umfasst wenigstens zwei Reibpartner 11, 12, die als Zahnräder symbolisiert und durch Motoren M1 und M2 angetrieben sind. Die Reibpartner 11, 12 sind in einem Gehäuse 13 untergebracht, das zumindest teilweise gasdicht und derart ausgebildet ist, dass ein einströmendes Schmiermittelschutzgas in kontrollierter Menge in dem Gehäuse 13 vorliegt und/oder dieses in einer kontrollierten Geschwindigkeit durchströmen kann.

Die Einrichtung 10 weist ein Schmiermittelreservoir 14, beispielsweise in Form eines für eine Tauchschmierung bereitgestellten Schmiermittelsumpfs, auf, das bodenseitig des Gehäuses 13 angeordnet ist. Generell können die Reibpartner 11, 12 vom Schmiermittelreservoir 14 zum Teil oder vollständig umgeben sein. Bodenseitig des Schmiermittelreservoirs 14 ist eine Einperleinrichtung 15 zum Einperlen eines Schmiermittelschutzgases in das Schmiermittel in dem Schmiermittelreservoir 14 vorgesehen. Das Schmiermittelschutzgas wird über Zuleitungen 16 zugeführt. Die Einperleinrichtung 15 umfasst vorzugsweise eine Membran und/oder eine Fritte, mittels derer Gasbläschen in dem Schmiermittelreservoir erzeugt werden können. Hierdurch wird eine besonders große Kontaktfläche zwischen dem Schmiermittel und dem Schmiermittelschutzgas erzeugt.

Um eine Durchströmbarkeit des Gehäuses 13 mit dem Schmiermittelschutzgas zu ermöglichen, sind, beispielsweise deckelseitig des Gehäuses 13, Auslassöffnungen 17 für das Schmiermittelschutzgas vorgesehen, durch die das Schmiermittelschutzgas kontinuierlich entweichen kann. Die Auslassöffnungen 17 können auch absperrbar und/oder steuerbar ausgebildet sein, damit ein konstanter und/oder intermittierender Schmiermittelschutzgasdurchsatz sichergestellt werden kann.

Wenngleich die zu schmierende Einrichtung 10 in der Figur 1 als zur Tauchschmierung ausgebildet dargestellt ist, wobei einer der Reibpartner 12 in das Schmiermittelreservoir 14 eintaucht, kann die Einrichtung auch zur Aerosolschmierung eingerichtet sein, wenn sichergestellt ist, dass durch die Einperlung des Schmiermittelschutzgases in das Schmiermittel in dem Schmiermittelreservoir 14 ein entsprechendes Aerosol erzeugt wird. In letzterem Fall kann das Schmiermittelreservoir 14 kontinuierlich durch das aus dem Aerosol auskondensierende Schmiermittel gebildet oder gespeist werden.

### Bezugszeichenliste

- 10: zu schmierende Einrichtung
- 11: Reibpartner
- 12: Reibpartner
- 13: Gehäuse
- 14: Schmiermittelreservoir
- 15: Einperleinrichtung
- 16: Zuleitungen
- 17: Auslassöffnungen
- M1: Motor
- M2: Motor

## Patentansprüche

1. Einrichtung (10) mit wenigstens zwei zu schmierenden Reibpartnern (11, 12) und zumindest einem in der Einrichtung (10) angeordneten Schmiermittelreservoir (14) für ein Schmiermittel, **gekennzeichnet durch** zumindest eine Schmiermittelschutzanordnung, die Mittel (15, 16) zum Durchströmen des Schmiermittels in dem Schmiermittelreservoir (14) sowie der Einrichtung (10) mit einem Schmiermittelschutzgas aufweist.

2. Einrichtung (10) nach Anspruch 1, bei der die Mittel (15, 16) zum Durchströmen des Schmiermittelreservoirs (14) sowie der Einrichtung (10) mit dem Schmiermittelschutzgas zumindest eine Zuleitung (16) für das Schmiermittelschutzgas und eine Einperleinrichtung (15) zum Einperlen des Schmiermittelschutzgases in das Schmiermittelreservoir (14) umfassen.

3. Einrichtung (10) nach Anspruch 1 oder 2, die zum Durchströmen mit dem Schmiermittelschutzgas Auslassöffnungen (17) für das Schmiermittelschutzgas aufweist.

4. Einrichtung (10) nach einem der vorstehenden Ansprüche, die eine Heizeinrichtung für das Schmiermittelschutzgas und/oder das Schmiermittel (14) aufweist.

5. Verfahren zum Schmieren einer Einrichtung (10) nach einem der vorstehenden Ansprüche, bei dem mittels einer Schmiermittelschutzanordnung das Schmiermittelreservoir (14) der Einrichtung (10) sowie die Einrichtung (10) mit einem Schmiermittelschutzgas durchströmt wird.

6. Verfahren nach Anspruch 5, bei dem als Schmiermittelschutzgas Argon, Stickstoff, Kohlendioxid, Kohlenmonoxid und/oder Acetylen oder eine Mischung wenigstens zweier dieser Gase verwendet wird.

7. Verfahren nach Anspruch 5 oder 6, bei dem die das Schmiermittelreservoir (14) der Einrichtung (10) sowie die Einrichtung (10) kontinuierlich oder intermittierend mit dem Schmiermittelschutzgas durchströmt werden.

8. Verfahren einem der Ansprüche 5 bis 7, bei dem als Schmiermittel ein Mineralöl, insbesondere mit Polymerzusätzen und/oder Additiven, verwendet wird.

9. Verfahren nach einem der Ansprüche 5 bis 8, bei dem eine Temperatur, eine Viskosität, eine Dichte und/oder eine Komprimierbarkeit des Schmiermittels und/oder des Schmiermittelschutzgases eingestellt wird.
